# EUROPEAN PATENT APPLICATION

(11) **EP 4 742 479 A1**
(43) Date of publication of application: **13.05.2026**
(21) Application number: 24856406.4
(22) Date of filing: 16.08.2024
(51) Int. Cl.: H02J 3/00, G06Q 50/06, H02J 3/32, H02J 3/38

(54) **POWER OPERATION SYSTEM**

(30) Priority: 18.08.2023 JP 2023133390
(71) Applicant: Sustech Inc., Tokyo 105-0014 (JP)
(72) Inventor: TANNO, Yusuke, Tokyo 105-0014 (JP); OHASHI, Akifumi, Tokyo 105-0014 (JP)
(74) Representative: RGTH
(86) International application number: PCT/JP2024/029153
(87) International publication number: WO 2025/041717

(57) **Abstract**

A power operation system according to the present invention comprises: one or more acquisition units selected from a state acquisition unit that acquires various states of a storage battery such as a charging rate, a capacity deterioration state, a battery temperature of a storage battery and the like, a power trade-price acquisition unit that acquires a future power trade-price prediction value in a power transaction market, an imbalance-fee acquisition unit that acquires a future imbalance-fee prediction value, a power-generation amount acquisition unit that acquires a future power-generation amount prediction value, and a power-demand amount acquisition unit that acquires a future power-demand amount prediction value; a plan creation unit that creates one or more selected from a charge/discharge plan of the storage battery having a maximum power operation profit, a power-generation sales plan, and a demand procurement plan on the basis of some or all of the states of the acquired storage battery and a power generation facility or a power consumption facility, the power trade price, the imbalance fee, the power generation amount, and the power-demand amount prediction value; and a storage unit that stores a constraint condition for restricting an operation of the storage battery and an avoidance measure of the restriction.

## Description

### TECHNICAL FIELD

The present invention relates to a power operation system.

### BACKGROUND ART

In power generation methods, such as solar power generation and wind power generation, that are likely to be affected by weather conditions, an attempt has been conventionally made to purchase and sell power according to the variation in a power generation amount for each time slot.

Patent Document 1 discloses a power management system that creates a power generation plan based on power demand prediction data created by power-demand individual information and weather information on a demand side of the power, and a bid plan based on the power generation plan and an assumed power exchange price assumed for bid conditions and a settlement price at the electric power exchange.

### Citation List

### Patent Documents

Patent Document 1: Japanese Unexamined Patent Application, Publication No. 2009-303411

### DISCLOSURE OF THE INVENTION

### Problems to be Solved by the Invention

The conventional technology involves creating the power generation plan and the bidding plan, but does not suggest maximizing the benefits by optimizing the power operation such as generation, consumption, trade, and storage of power using the prediction of a power trade price in a power transaction market and the characteristics of a storage battery. In particular, changes over time in the charging and discharging capability based on the characteristics of a storage battery result in a missed opportunity to obtain the benefits in a power bilateral transaction and a power market transaction in some cases.

The present invention provides a power operation system that maximizes benefits in power operation in a power bilateral transaction and a power market transaction based on predictions regarding a fluctuation of a power trade price in a power transaction market, a change in charging and discharging performance of a storage battery, and operation constraints.

### Means for Solving the Problems

A power operation system of one aspect of the present invention includes
one or more acquisition units selected from
a state acquisition unit that acquires a current state and a future state prediction of a storage battery including at least one selected from a state of charge (SOC) of the storage battery, a state of health (SOH) of the storage battery, and a battery temperature, and a current state and a future state prediction of a power generation facility or a power consumption facility,
a power trade-price acquisition unit that acquires a future power trade-price prediction value in a power transaction market,
an imbalance-fee acquisition unit that acquires a future imbalance-fee prediction value, and
a power-generation amount acquisition unit that acquires a future power generation amount prediction value and a power-demand amount acquisition unit that acquires a future power-demand amount prediction value,
a plan creation unit that creates some or all of a charging and discharging plan of the storage battery, a generated-power sales plan, and a demand and procurement plan that maximize a power operation profit based on some or all of the current state and the future state prediction of the storage battery, the current state and the future state prediction of the power generation facility or the power consumption facility, the power trade-price prediction value, the imbalance-fee prediction value, the power-generation amount prediction value, and the power-demand amount prediction value that are acquired by the acquisition unit selected, and
a storage unit that stores constraint conditions for constraining an operation of the storage battery and an avoidance measure of the constraint.

According to the present invention, a user's profit by the power operation can be maximized by acquiring the current and future states of the storage battery and the state of the other power generation facility or the power consumption facility, the future power trade price and imbalance fee, and the information that affects the power generation amount and the power demand amount, and creating the charging and discharging plan of the storage battery, the generated-power sales plan of the power, and the demand and procurement plan (hereinafter, referred to as a "power operation plan" in this specification) based on these information.

The power operation system of one aspect of the present invention further includes
a determination unit that determines a section in which the charging and discharging plan, the generated-power sales plan, and the demand and procurement plan that are created need to be changed, based on the constraint conditions stored,
a calculation comparison unit that calculates and compares, in the section determined by the determination unit,
two or more selected from
a power operation profit in a case where the charging and discharging plan, the generated-power sales plan, and the demand and procurement plan are changed,
a power operation profit in a case where the avoidance measure of the constraint conditions is performed, and
a power operation profit in a case where the charging and discharging plan, the generated-power sales plan, and the demand and procurement plan are changed and the avoidance measure of the constraint conditions is performed, and
a plan determination unit that changes the charging and discharging plan, the generated-power sales plan, and the demand and procurement plan or performs the avoidance measure of the constraint conditions, based on a comparison result from the calculation comparison unit.
According to the present invention, an influence on a user's power operation profit can be suppressed and the profit can be maximized by comparing among the power operation profit based on the corrective plan newly created, the power operation profit in a case where the measure to avoid the constraint conditions is performed, and the power operation profit in a case where both cases are performed, even when the circumstances (constraint conditions) that affects the power trade after plan creation occur or are predicted to occur.

In the power operation system of one aspect of the present invention,
the constraint conditions include a charging and discharging duration due to temperature changes of the storage battery, upper and lower limit temperatures at which the charging and discharging are stopped, a current amount during the charging and discharging, and upper and lower limits of an SOC. According to the present invention, the plan can be suitable for actual conditions by creating the charging and discharging plan, the generated-power sales plan, and the demand and procurement plan taking into account the constraint conditions when the storage battery is used.

In the power operation system of one aspect of the present invention,
the avoidance measure includes an adjustment of a charging and discharging amount of the storage battery, and cooling or heating of the storage battery. According to the present invention, it is possible to extend a degree of freedom of the operation of the storage battery by performing the measure to avoid the constraint conditions when the storage battery is used.

In the power operation system of one aspect of the present invention,
the power operation profit is able to be calculated using one or more selected from a cost of power associated with performance of the avoidance measure, a cost of power used for an auxiliary device installed in the storage battery, a cost of power used for an auxiliary device installed in a power generation facility, and an imbalance fee. According to the present invention, the power operation profit more suitable for the actual conditions can be calculated and optimization calculation for maximizing the profit can be performed by calculating the power operation profit taking into account a cost required for the measure to avoid the constraint conditions when the storage battery is used.

### Effects of the Invention

According to the power operation system of the present invention, the user's power operation profit can be maximized by optimizing the power operation plan based on the current and future states of the storage battery and the state and prediction of the other power generation facility or the power consumption facility, the prediction value of the power trade price in the power transaction market, the prediction value of the imbalance fee, the prediction value of the power generation amount, and the prediction value of the power demand amount, and controlling the apparatuses required for power use, the storage battery, and the apparatuses accompanying the storage battery. An influence on the user's power operation profit can be suppressed and the power operation profit can be maximized by comparing among the power operation profit based on the corrective plan newly created, the power operation profit in a case where the measure to avoid the constraint conditions is performed, and the power operation profit in a case where both cases are performed, even when the circumstances (constraint conditions) that affects the power trade after plan creation occur.

### BRIEF DESCRIPTION OF THE DRAWINGS

FIG. 1 is a diagram illustrating one embodiment of a system configuration in a power operation system of the present invention;
FIG. 2 is a schematic diagram illustrating one embodiment of hardware constituting the power operation system of the present invention;
FIG. 3 is a schematic diagram illustrating one embodiment of a relationship among the power operation system of the present invention, resources including a power generation facility, a demand facility, a storage battery, and the like, and electricity sales destinations such as various power transaction markets and a retail electricity supplier;
FIG. 4 is a block diagram illustrating functions executed in a control unit;
FIG. 5 is a graph showing a relationship between a state of charge (SOC) and a spot market price when the storage battery is used for a certain time;
FIG. 6 is a flowchart for creating and executing a power operation plan including a charging and discharging plan, a generated-power sales plan, and a demand and procurement plan in the power operation system of the present invention;
FIG. 7A is a graph showing a relationship between an elapsed time for charging and discharging and an SOC of a storage battery in Embodiment 1 of the present invention;
FIG. 7B is a graph showing a relationship between the elapsed time for charging and discharging and the SOC of the storage battery in Embodiment 1 of the present invention;
FIG. 8 is a graph showing a relationship between an elapsed time for charging and discharging and an SOC of a storage battery in Embodiment 2 of the present invention; and
FIG. 9 is a graph showing a relationship between an elapsed time for charging and discharging and an SOC of a storage battery in Embodiment 3 of the present invention.

### PREFERRED MODE FOR CARRYING OUT THE INVENTION

Hereinafter, a power operation system of the present invention will be described.

### [1. Overall Configuration]

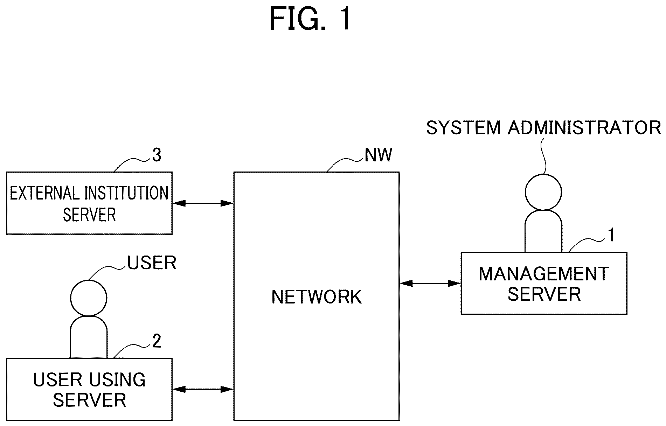

FIG. 1 is a diagram illustrating one embodiment of an overall system configuration in the power operation system of the present invention. In the power operation system of the present invention of FIG. 1, a management server 1 managed by a system administrator, a user using server 2 used by a user of the power operation system, and an external institution server 3 are connected to be able to communicate with one another through a network NW. Note that the form of the network NW is not limited to a particular form, and examples of the network form can include Bluetooth (registered trademark), Wi-Fi, a local area network (LAN), and the Internet. The user using server 2 is connected with a user terminal such as a smartphone, a tablet personal computer, and a desktop personal computer, and when a user operates the user terminal, the user terminal is connected with the network NW to communicate data with the other devices. The external institution server 3 is a server other than the management server 1 and the user using server 2, is a server that exchanges information with the power operation system of the invention, and includes servers owned by OCCTO and JPEX, and servers that manage power-generation facilities.

### [1.1 Hardware Configuration of Power Operation System]

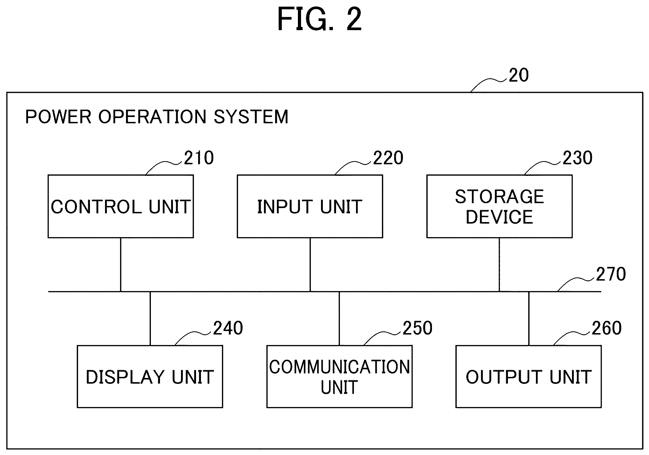

Next, a hardware configuration of the power operation system of the present invention will be described. FIG. 2 is a schematic diagram illustrating hardware constituting the power operation system (power operation system 20) of the present invention. As illustrated in FIG. 2, this system includes a control unit 210, an input unit 220, a storage device 230, a display unit 240, a communication unit 250, and an output unit 260, and these are connected via a system bus 270.

In FIG. 2, the control unit 210 is, for example, a processor such as a CPU, and executes a program describing processing in the power operation system 20. The input unit 220 includes, for example, a keyboard, and a mouse, and is used by a user of the computer system to input various information. The storage device 230 includes various memories such as a random access memory (RAM), and a read only memory (ROM), and a storage device such as a hard disk, and an SSD, and stores an application program to be executed by the control unit 210, necessary data obtained in the course of processing, and the like. The storage device 230 may be also used as a temporary storage area during execution of a program. The display unit 240 includes a display, a liquid crystal display (LCD), and the like, and displays various screens to the user. The communication unit 250 is a receiver and a transmitter that perform communication processing. The output unit 260 is a printer, or the like. Note that FIG. 2 illustrates an example, which does not limit the hardware configuration of the power operation system 20.

Here, a description will be given of exemplary operations of the power operation system 20 until a state is reached where execution of the application program for executing the functions of the power operation system 20 is enabled. In the power operation system 20 having the above-described configuration, the application program is downloaded from, for example, a compact disc (CD)-ROM or a digital versatile disc (DVD)-ROM set in a CD-ROM drive or a DVD-ROM drive not illustrated or is downloaded through a transmission medium such as the Internet via the communication unit 250, and then is installed. To execute the application program, the program is activated from the storage device 230. In this state, the control unit 210 executes the function as the power operation system 20 according to the application program activated from the storage device 230.

The application program for executing the function of the power operation system 20 does not need to be stored in the storage device 230, and may be stored in, for example, an external storage device and be executed by accessing the external storage device through the network. In a case of executing the function of the power operation system 20 through the network, the user may be requested to input a user ID and a password.

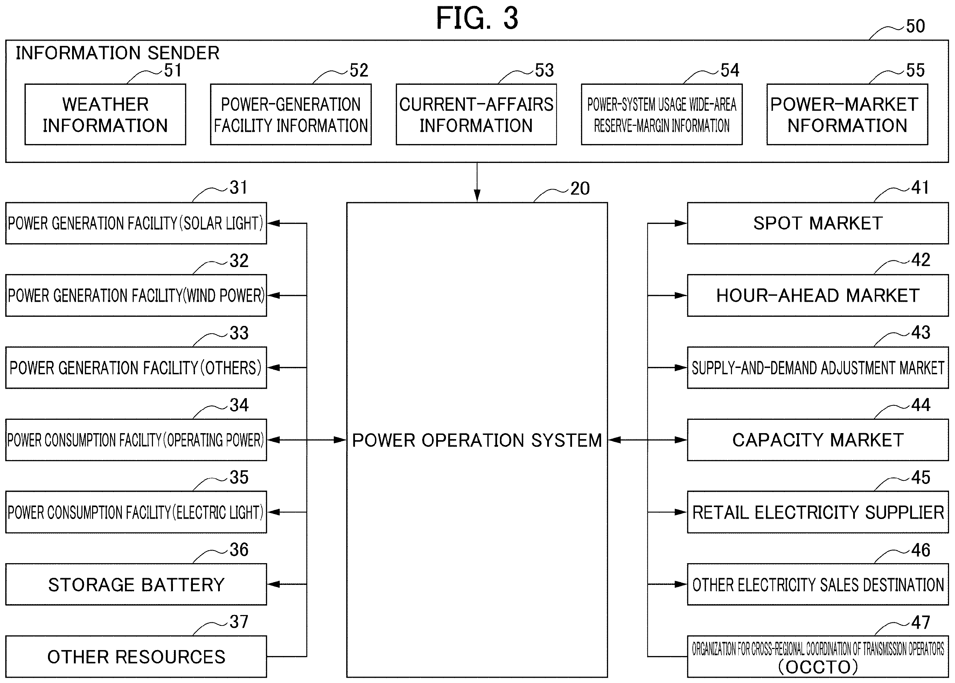

FIG. 3 is a schematic diagram illustrating a relationship among the power operation system of the present invention, resources including a power generation facility, a demand facility, a storage battery, and the like, and electricity sales destinations such as various power transaction markets and a retail electricity supplier.

### [1.2 Information Exchange with External Institutions]

In order to create a power operation plan including a charging and discharging plan, a generated-power sales plan, and a demand and procurement plan, the power operation system 20 communicates data between external institutions including each power generation facility, a power generation operator, a power generation contractor, a power consumption facility, a consumer, a storage battery, an aggregator, a power transaction market, a retail electricity supplier, organization for cross-regional coordination of transmission operators, and an information sender and the user of the power operation system 20 through the network NW. The data communication is performed by the communication unit 250.

### [1.2.1 Information Exchange with External Facilities]

The power operation system 20 acquires, from the power generation facility, information relating to a power generation amount for each time slot, the presence or absence of output suppression, the presence or absence of apparatus failure, and an operation status. Here, the facility in this specification refers to a power facility such as solar power generation, wind power generation, water power generation, geothermal power generation, biomass power generation, thermal power generation, and nuclear power generation. In addition, the power operation system 20 acquires, from the power consumption facility, information relating to a power demand amount for each time slot, the presence or absence of an energy management system in the power consumption facility, a control instruction from the energy management system, and the presence or absence of apparatus failure. Furthermore, the power operation system 20 also acquires information relating to an power amount charged in the storage battery and the operation status. Each of the information acquired from the power generation facility, the information acquired from the power consumption facility, and the information acquired from the storage battery includes information on a prediction value in addition to the information acquired from the corresponding facility.

Note that the power generation facility and the storage battery may be installed in, for example, a site of a specific electricity consumer. In such a case, the power operation system 20 can acquire the information relating to the power generation such as a power generation amount, a power generation time, and power generation efficiency of the power generation facility, and the information relating to the state of the storage battery such as a temperature state of the storage battery including a cell-unit temperature, a state of charge (SOC), the number of elapse cycles, a deterioration degree, and a state of health (SOH), based on the time series information detected by a sensor installed in the power generation facility. The information exchange between the power operation system 20 and the exterior facilities is performed by the control unit 210 (state acquisition unit 2102), and the acquired information is stored in the storage device 230.

### [1.2.2 Information Exchange with Power Trading Partners]

The power-generation sales plan and the demand and procurement plan are submitted to the OCCTO.

The power operation system 20 has to submit, to the OCCTO, a next day plan that is created for 48 frames segmented in 30-minute units as the generated-power sales plan or the demand and procurement plan by twelve o'clock on a day before the power supply and demand day. After submission of the next day plan, in order to accommodate changes in information relating to power supply and demand, the submitted plan is changed and a new plan (intraday plan) is submitted by a gate close time (one hour before actual supply and demand) in some cases. In a case where the power charged in the storage battery is sold (discharged) or in a case where the power is purchased from a grid to cause the storage battery to function as a grid-scale storage battery, a bid is made to purchase and sell the power in the JPEX or the like. Since these require a selection of an optimum bidding market for each of frames segmented in 30-minute units, and selections of bidding conditions, a bidding timing, a bidding amount, and a bidding method, a plan creation unit 2107 in the power operation system 20 creates a power operation plan that maximizes a power operation profit of the power generation operator taking into account these conditions, and the plan is automatically or manually submitted. The information exchange between the power operation system 20 and the JPEX or the like is performed by the control unit 210, and the transmitted or acquired information is stored in the storage device 230. Note that a timing of plan creation and the number of frames per day are merely example, and are not limited to thereto.

The power operation system 20 exchanges the information with the power trading partners. The power trading partners include a spot market 41, an hour-ahead market 42, a supply-and-demand adjustment market 43, a capacity market 44, a retail electricity supplier 45 that performs power supply based on a bilateral contract, and other electricity sales destinations 46 including a general power transmission and distribution operator. The communication unit 250 exchanges, with the power trading partners, transaction price information in each market, and information related to purchasing and selling power from and to the retail electricity supplier 45, and the like by data communication through the network NW with the external institution servers 3 that manage respective power trading partners.

### [1.2.3 Information Exchange with Information Sender]

The power operation system 20 acquires, from an external information sender 50, information necessary to create the power operation plan including the charging and discharging plan, the generated-power sales plan, and the demand and procurement plan, in addition to information on each of the power generation facilities 31, 32, and 33, the power consumption facilities 34, and 35, the storage battery 36, and the like acquired from the state acquisition unit 2102. The information acquired from the information sender 50 includes, but is not limited to, weather information 51 acquired from a weather forecasting company, power-generation facility information 52 related to an accident and stop of a power generation plant, triggering performance record information on a power usage limitation, triggering performance record information on a planned power outage, a calculated index used for calculation of a corrected fee, current-affairs information 53 related to accidents and economy, power-system usage wide-area reserve-margin information 54 published by the Organization for Cross-regional Coordination of Transmission Operators (OCCTO) 47, an imbalance fee, an imbalance amount, transaction information in the spot market 41, transaction information in the hour-ahead market 42, transaction information in the supply-and-demand adjustment market 43, power-market information 55 related to transaction information in the capacity market 44, and other current-affairs information, and the information may be any information that may affect the power operation plan including the charging and discharging plan, the generated-power sales plan, and the demand and procurement plan. The power operation system 20 acquires, from the state acquisition unit 2102, the information from the information sender 50 using the data communication through the network NW. The information exchange between the power operation system 20 and the information sender 50 is performed by the control unit 210, and the acquired information is stored in the storage device 230.

### [1.2.4 Submission of Plan to OCCTO]

A contractor, a power generation contractor, and the like submits the generated-power sales plan or the demand and procurement plan to the OCCTO 47. Therefore, the user submits the generated-power sales plan or the demand and procurement plan and exchanges the other information by the data communication through the network NW between the management server 1 of this plan creation system and the external institution server 3 owned by the OCCTO 47.

In this specification, the consumer includes, but is not limited to, a public facility such as a school, a public office, and a hospital, a factory of a manufacturer, a commercial facility such as a supermarket, a shop, a company office, a residential facility, a logistics facility, and a disaster prevention base facility. In recent years, with regard to the power transaction, a balancing group (hereinafter, referred to as a BG) is used as a group of operators that performs the imbalance settlement, and a power generation BG which is a BG formed by the power generation contractors and its members, and a demand BG which is a BG formed by the retail electricity suppliers and the like and its members are also assumed as users of the power operation system 20.

The power transaction market includes, for example, the spot market 41, the hour-ahead market 42, the supply-and-demand adjustment market 43, and the capacity market 44. The power transaction is performed by a computer, and the operators that participate in the transaction make bidding through the Internet or the like. When participating in the transaction in the power transaction market, the operators formulate the generated-power sales plan and the demand and procurement plan, and the bidding plan including the selection of a bidding market, taking into consideration the power generation amount, the power demand amount, a cost required for the power generation, a cost required for the power supply, a cost required for the control of the storage battery, a maximum output of a power generator, contracted power, and a market price.

The storage battery 36 may be used mainly as a renewable energy-integrated storage battery that temporarily stores the power supplied from the power generation facility using renewable energy, or may be used as a grid-scale storage battery in which the power is purchased and sold to a grid, but is not limited thereto. For example, the storage battery 36 may be installed for the purpose of selling surplus power obtained by subtracting a power demand amount, which will be described later, from the power supplied from the power generation facility using renewable energy in the time slot during which the market price of the JPEX is high and increasing a profit. Alternatively, the storage battery 36 may be installed for the purpose of being used as means for providing for the power demand amount in the time slot during which the power amount supplied from the power generation facility using renewable energy decreases. In addition, the storage battery 36 may store the power purchased from the spot market 41 in advance in preparation for a case where the power generation amount of the power generation facility (solar power generation) 31 is less than the power demand amount of the power consumption facility (operating power) 34, the power consumption facility (electric light) 35, or the like. As the storage battery 36, a well-known storage battery such as an NAS battery, a redox flow battery, and a lithium ion battery can be used, or a storage battery newly developed and provided in the future may be used. In order to avoid the operational constraints of the storage battery due to heat generation or heat absorption during charging and discharging or avoid the deterioration of the storage battery, a device for prolonging the lifetime of the storage battery may be installed, a temperature adjustment function such as a cooling fan, and a heater may be provided, or an auxiliary device having a temperature adjustment function may be installed.

### [2. Functions of Power Operation System]

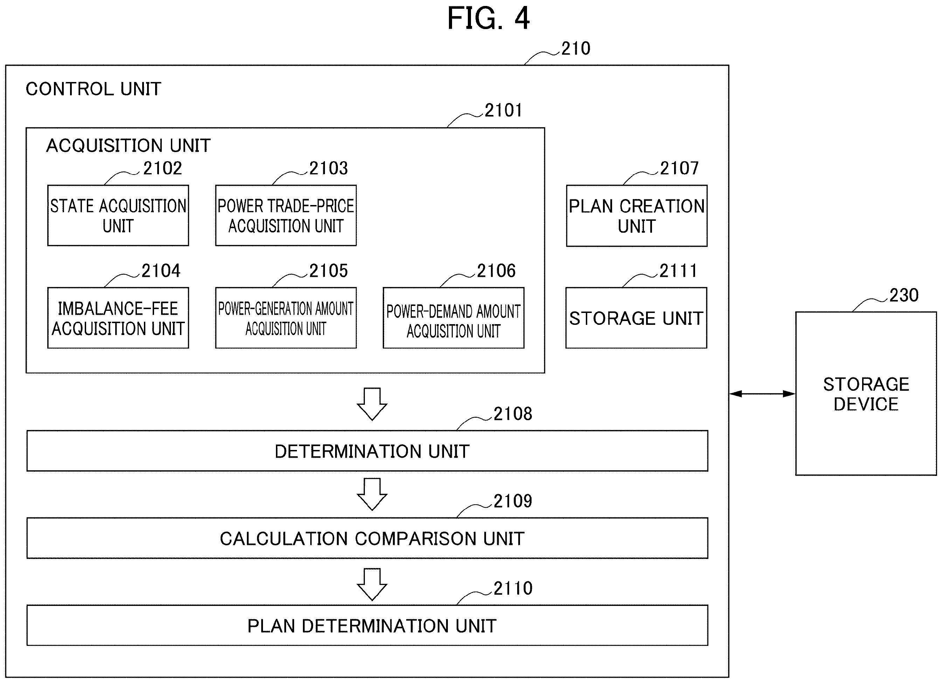

Next, a configuration of the control unit 210 in the power operation system 20 will be described. FIG. 4 is a block diagram illustrating functions executed in the control unit 210. As described above, the power operation system 20 includes the control unit 210 that activates and controls an application program for implementing each function, and the storage device 230 that stores the application program and data. As the functions executed in the control unit 210, the control unit 210 includes an acquisition unit 2101, the plan creation unit 2107, a determination unit 2108, a calculation comparison unit 2109, a plan determination unit 2110, and a storage unit 2111.

The acquisition unit 2101 has a function of acquiring information for creating plans of the charging and discharging plan, the generated-power sales plan, and the demand and procurement plan, and includes one or more acquisition units selected from, but is not limited to, as described later, the state acquisition unit 2102 a power trade-price acquisition unit 2103, an imbalance-fee acquisition unit 2104, a power-generation amount acquisition unit 2105, and a power-demand amount acquisition unit 2106. In this specification, in a case where it is not necessary to distinguish the state acquisition unit 2102, which will be described later, the power trade-price acquisition unit 2103, the imbalance-fee acquisition unit 2104, the power-generation amount acquisition unit 2105, and the power-demand amount acquisition unit 2106, they are simply referred to as an acquisition unit 2101.

The state acquisition unit 2102 acquires information related to a current state and a future state prediction (including information used for a future state prediction of the hardware) of the hardware necessary for the power operation system 20 to perform the power operation. In particular, the state acquisition unit 2102 acquires information on the power generation facility (solar light) 31, the power generation facility (wind power) 32, the power generation facility (others) 33, the power consumption facility (power) 34, the power consumption facility (electric light) 35, and the storage battery 36, as well as other resources 37, and the like. As the information on each of the power generation facilities 31, 32, and 33, the state acquisition unit 2102 acquires information necessary for predicting a current or future total power generation amount, power generation efficiency, a power generation time, and the like including deterioration or failure information and information on a rest due to maintenance of the power generator in each of the facilities. The above-described information may be acquired from a sensor or the like installed in each of the power generation facilities 31, 32, and 33. As the information on each of the power consumption facilities 34 and 35, the state acquisition unit 2102 acquires information necessary for predicting a current or future total power demand amount, a power consumption time, and the like, including operation information, deterioration or failure information, and information on a rest due to maintenance of the power consumption facility in each of the facilities.

The information on the storage battery 36 is information for grasping a charging and discharging capability of the storage battery 36, the information including, for example, a temperature, a state of charge (SOC), a state of health (SOH), the presence or absence of failure, the number of times of charging and discharging from the operation start, an operating history, the charging and discharging efficiency including the Power Conditioning System (PCS)
efficiency, and a response speed of the storage battery 36, and current state and future state prediction information on the storage battery, such as a required auxiliary device power amount, and the above-described information is acquired as information necessary for formulating the future charging and discharging plan of the storage battery. The above-described information may be acquired from a sensor or the like installed in the storage battery 36.

The information acquired by the state acquisition unit 2102 includes not only the information on the power generation facilities 31, 32, and 33, the power consumption facilities 34 and 35, and the storage battery 36 but also hardware information, such as the deterioration state of a power transmission facility, which may affect the processing of the power operation system 20. In addition, the information acquired by the state acquisition unit 2102 is not limited to record values of the deterioration statuses of the power generation facilities 31, 32, and 33, the charging and discharging capability of the storage battery 36, and the like, and may include prediction values in the future. The information may be acquired as design data at the timing when the operation of the power operation system 20 is started, or the information may be acquired as real-time data at the timing of the end of the operation or at the timing in the middle of the operation.

The storage unit 2111 executes a function of storing, in the storage device 230, the information that affects the processing of the power operation system 20, in addition to the information acquired by the state acquisition unit 2102. In particular, constraint conditions that affect the operation of the storage battery 36 used in the power operation system 20, and a method of performing a measure to avoid the constraint are also stored in the storage device 230. Here, the constraint conditions that affect the operation of the storage battery 36 include an appropriate operating temperature range at which the charging and discharging are to be stopped due to temperature changes during charging and discharging, a range of current amount for safely performing charging and discharging, and upper and lower limit values of the SOC for preventing the deterioration of the storage battery 36.

The power trade-price acquisition unit 2103 acquires a prediction value of a power trade price in the power transaction market. The power trade-price acquisition unit 2103 may, for example, calculate a prediction value of a power trade price in the power transaction market, or may acquire a prediction value of a power trade price from, for example, an external institution or an outsourcing contractor. In a case where it is necessary to consider a plurality of transaction markets such as the spot market 41 and the hour-ahead market 42, the power trade-price acquisition unit 2103 acquires a prediction value of a market price for each of the transaction markets. A method of predicting a power trade price in the power transaction market is not limited to a particular method, and a known method can be used. For example, the power trade price may be predicted based on the past record information, the weather information, the calendar information and the like in a target area, or may be calculated using a trained model in which a relationship between the above-described information and the record values of the past power trade prices is learned as training data.

The imbalance-fee acquisition unit 2104 acquires a prediction value of a future imbalance fee. The imbalance-fee acquisition unit 2104 may calculate a prediction value of an imbalance fee, or may acquire a prediction value of an imbalance fee by receiving it from, for example, an external institution or an outsourcing contractor. A method of predicting an imbalance fee is not limited to a particular method, and a known method can be used. For example, the imbalance fee may be predicted based on the past record information, the weather information, the calendar information and the like in a target area, or may be calculated using a trained model in which a relationship between the above-described information and the record values of the past imbalance fees is learned as training data.

The power-generation amount acquisition unit 2105 predicts a power generation amount and a power generation time in a facility or an area capable of generating power by solar light, wind power, water power, or others based on the operation plan of the power generation facility and the weather information. The power-generation amount acquisition unit 2105 may, for example, calculate a prediction value of a power generation amount, or may acquire a prediction value of a power generation amount from, for example, an external institution or an outsourcing contractor. For example, in a case of the solar power generation, a power generation amount and a power generation time of the solar power generation facility can be predicted from a solar radiation amount, sunshine duration, and the power generation efficiency of the solar power generation device based on the weather forecast information of an area where a solar power generator is installed. Since the power generation efficiency of the solar power generation facility varies depending on factors such as deterioration over time and dirt of a solar panel used, and an angle of the solar panel, the power generation efficiency can be calculated by a predetermined calculation formula weighted for each of the factors. Alternatively, the power generation efficiency of the solar power generation facility may be calculated using a trained model in which a relationship between the above-described factors and the past power generation record values is learned as training data. The weather information used for the prediction in a case of the wind power generation is different in including a wind speed, a wind direction, and the like, and in a case of the water power generation is different in including a rainfall amount, and the like, but the other weather information is the same, and the description thereof is omitted.

The power-demand amount acquisition unit 2106 predicts a power demand amount of a particular consumer or in a particular area. In this case, the power demand amount can be calculated based on the information on characteristics (a factory, a shop, a hospital, a school, an office, and the like) of the consumer or consumers located in the area and factors (main mechanical characteristics in a factory) that affect the demand amount, and the information on the operation plan (a production plan in the factory, a business schedule in the shop, and the like) of these consumers. Furthermore, the factors that affect the power demand amount may include the climate (for example, weather, temperature, humidity) forecast information at a spot where the demand occurs. The power-demand amount acquisition unit 2106 may, for example, calculate a prediction value of a power demand amount, or may acquire a prediction value of a power demand amount from, for example, an external institution or an outsourcing contractor. A method of predicting a power demand amount is not limited to a particular method, and a known method can be used. For example, the power demand amount may be predicted based on the past record information, the weather information, the calendar information and the like in a target area, or may be calculated using a trained model in which a relationship between the above-described information and the record values of the past power demand amounts is learned as training data.

The power-demand amount acquisition unit 2106 can include, as the power demand amount, the power for operating the power generation facility 31, 32, or 33, or the storage battery 36, the power for adjusting a charging and discharging amount of the storage battery 36, and the power amount used for the operation of a cooling auxiliary device (for example, a cooling fan) or a heating auxiliary device (for example, a heater) for maintaining the temperature of the storage battery 36 in the appropriate operating temperature range.

The plan creation unit 2107 creates a power operation plan to maximize a user's power operation profit based on some or all of the current state and the future state prediction of the storage battery 36, the current state and the future state prediction of the power generation facility or the power consumption facility (including an auxiliary device used for cooling or heating the storage battery), and the acquired power trade-price prediction value, imbalance-fee prediction value, power-generation amount prediction value, and power-demand amount prediction value. Note that during operation of the power generation facilities 31, 32, and 33, when the power-generation prediction value in the originally created power operation plan is significantly different from or is predicted to be significantly different from the record value, when the power-demand amount prediction value is significantly different from or is predicted to be significantly different from the record value, when the transaction price in the power transaction market significantly fluctuates or is predicted to significantly fluctuate, or when it becomes necessary to cool the storage battery 36 to maintain the original power operation plan, the plan creation unit 2107 may be adapted to be able to change the power operation plan as needed. The power operation plan may be automatically updated based on preset conditions, and it is preferable that the automatic update can be stopped according to the intention of the user and manually changed. The plan creation unit 2107 creates a corrective operation plan related to a section indicated by the determination unit 2108, which will be described later, when receiving an instruction to create the corrective operation plan from the determination unit 2108.

The determination unit 2108 determines a section in which the power operation plan created by the plan creation unit 2107 needs to be changed, based on the constraint conditions of the storage battery 36 stored in the storage device 230. For example, when the temperature of the storage battery 36 is outside an operating temperature range, the determination unit 2108 determines that the creation of the corrective operation plan is required.

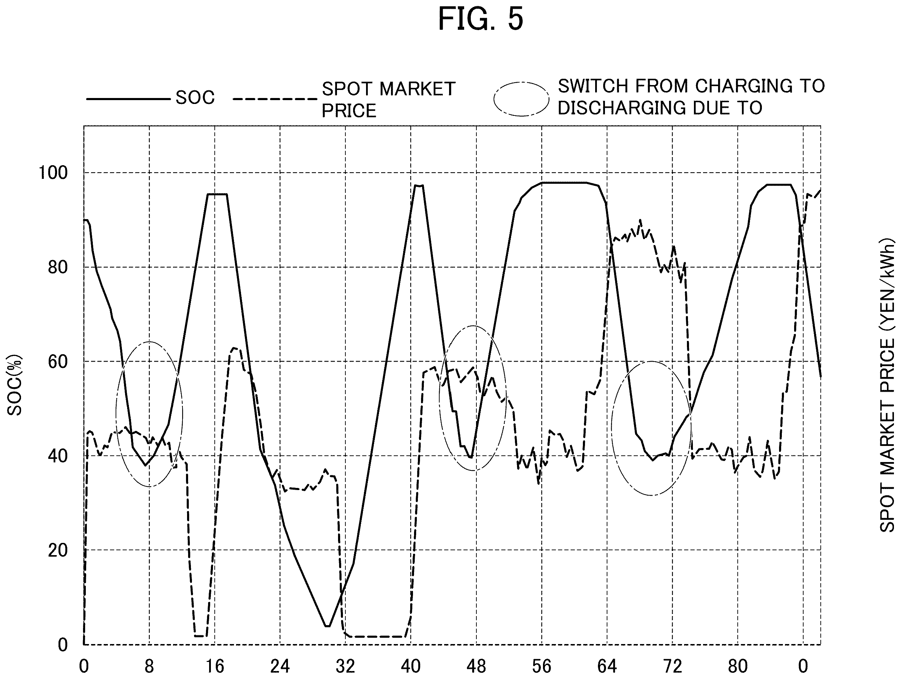

FIG. 5 shows a relationship between the SOC of the storage battery 36 and a spot market price when the conventional storage battery is used for a certain time. When the surplus power charged in the storage battery 36 is sold (discharged), it is preferable that the power is sold in the time slot during which the spot market price is high. In the example in FIG. 5, the SOCs indicated by circled portions at the time points of 8 hours, 48 hours, and 70 hours after the operation start in the graph are represented by downward convex curves (are switched from discharging to charging). Since in these time slots, the spot market price is maintained at a relatively higher value than that in the peripheral time slot, it is preferable to sell as much power as possible, but the SOC is switched to charging at around 40%. This means that the discharging is restricted from the viewpoint of safety, due to an increase in temperature of the storage battery 36, and is automatically changed to rest or charging, which results in a missed opportunity to sell the power at a timing when the spot market price is high. In contrast, the power operation system 20 enables the SOC lower limit during discharging to be lower than around 40% by cooling the storage battery 36 with a cooling fan installed in the storage battery 36, so that the power can be sold at the timing when the spot market price is high. Note that the power operation system 20 performs the cooling not only in a time slot when the cooling conflicts with a temperature constraint, but also may start the cooling (pre-cooling) prior to the time slot when the cooling is expected to conflict with the temperature constraint in the future.

If the temperature of the storage battery 36 is predicted, from the past record data, to exceed an upper limit value of the operating temperature due to discharging, in order to avoid a further increase in temperature of the storage battery 36 due to discharging, the determination unit 2108 reviews the power operation plan to change, limit or suppress the operation pattern of the storage battery 36, and determines the presence or absence of necessity of a measure to cancel the discharging of the storage battery 36, reduce the discharging amount of the storage battery 36, or perform the discharging of the storage battery 36 in a split manner, and the like. The same also applies to a case where the temperature of the storage battery 36 is predicted to exceed a lower limit value of the operating temperature.

Such constraint conditions of the storage battery 36 include the deterioration degree of the storage battery 36, and the shortage of the capacity of the storage battery 36 in addition to the increase and decrease in temperature of the storage battery 36. The constraint conditions include not only the constraint conditions of the storage battery 36 but also operation constraints of the power transmission facility and the power generation facility.

The determination unit 2108 instructs the plan creation unit 2107 to create a corrective operation plan in which the original power operation plane is changed for a section determined that the power operation plan needs to be changed.

The calculation comparison unit 2109 calculates and compares, in the section determined by the determination unit 2108, two or more selected from a power operation profit in a case where the power operation plan is changed, a power operation profit in a case where the original power operation plan is maintained by performing a measure to avoid the constraint conditions, and a power operation profit in a case where the original power operation plan is changed while the measure to avoid the constraint conditions is performed. Note that the power operation profit may be a profit obtained by taking into account the cost of the power amount used for cooling or heating of the storage battery as described above, the other auxiliary device power cost, the imbalance fee, and the like.

The plan determination unit 2110 changes the power operation plan, performs the measure to avoid the constraint conditions, or performs both, based on the comparison result from the calculation comparison unit 2109. Note that the determination as to whether to change the power operation plan may be automatically made based on predetermined conditions, or the power operation plan may be manually input by user's determination.

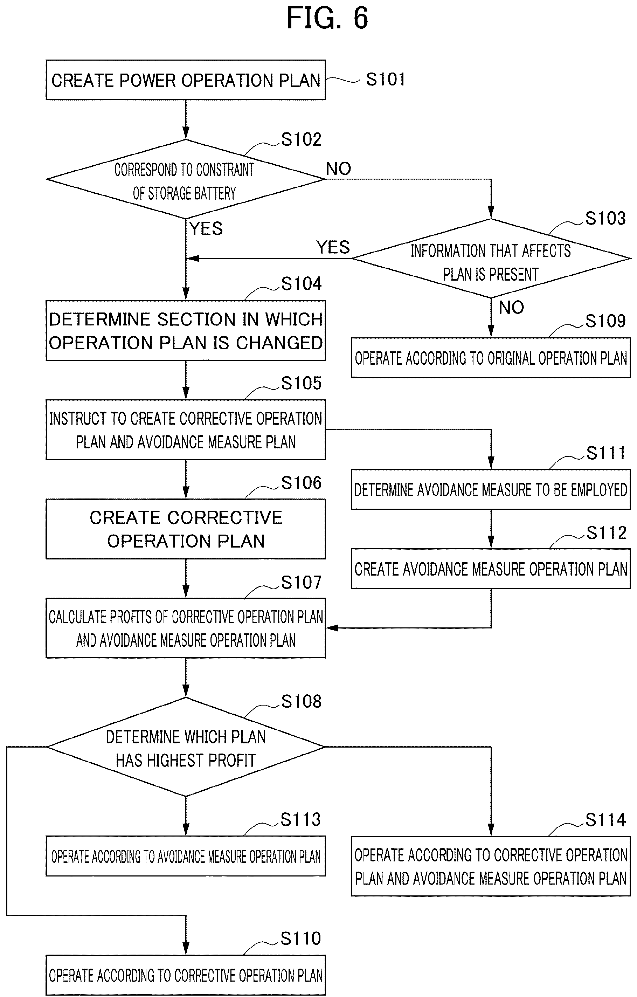

A step of creating a power operation plan in the power operation system 20 will be described using a flowchart in FIG. 6. In the power operation system 20, the plan creation unit 2107 creates a power operation plan to maximize a power operation profit based on the information such as the current state and the future state prediction of the storage battery 36, the current state and the future state prediction of the other power generation facility or the power consumption facility, the prediction value of the power trade price, the prediction value of the imbalance fee, the prediction value of the power generation amount, and the prediction value of the power demand amount (S101). In the operation based on the created power operation plan, if a constraint is found to be imposed on the charging and discharging of the storage battery 36 (S102: YES), the determination unit 2108 determines a section (time slot) in which the power operation plan is to be changed (S104), and instructs the plan creation unit 2107 to create a corrective operation plan (S105). Even when it cannot be predicted that the constraint is imposed on the charging and discharging of the storage battery 36 (S102: NO), if the information that affects the power operation plan is received which indicates that the power trade price in the power transaction market significantly fluctuates (S103: YES), the determination unit 2108 determines a section (time slot) in which the plan is to be changed (S104), and instructs the plan creation unit 2107 to create the corrective operation plan or an avoidance measure operation plan when the avoidance measure is employed (S105). If the information that affects the power operation plan is not received (S103: NO), the plan determination unit 2110 performs changing and discharging control of the storage battery, the power generation and sale, or the supply and procurement of the power based on the original power operation plan (S109).

The plan creation unit 2107 that has received the instruction to create the corrective operation plan and the avoidance measure operation plan creates the corrective operation plan and the avoidance measure operation plan (S106 and S112). To create the avoidance measure operation plan, the plan creation unit 2107 determines an avoidance measure to be employed (S111). The avoidance measure is determined based on the magnitude of the constraint imposed on the charging and discharging of the storage battery 36, and for example, when it is predicted that the assumed degree of excess of a temperature constraint is 0°C or more, the plan is created to operate the cooling fan in the time slot, but when it is predicted that the assumed degree of excess of the temperature constraint is 5°C or more, the avoidance measure operation plan is created in which the operation of the cooling fan is started 3 hours prior to the time slot. Subsequently, the calculation comparison unit 2109 calculates a power operation profit in each of the corrective operation plan and the avoidance measure operation plan (including a plan when both plans are performed) (S107), and determines the plan with the highest power operation profit (S108), and the plan determination unit 2110 issues an instruction to operate in the corrective operation plan (S110), to operate in the avoidance measure operation plan (S113), or to operate in the combination of both plans (S114).

### EMBODIMENTS

Hereafter, a specific embodiment of the power operation system of the present invention will be described.

### [Embodiment 1: Use of Storage Battery as Grid-scale Storage Battery]

In a first embodiment of the present invention, a power generation operator sells, in the spot market, the power charged using a grid-scale storage battery (hereinafter, referred to as a first storage battery in the present embodiment). Note that a cooling fan is installed in the first storage battery to avoid an increase in temperature during discharging. To increase the power operation profit of the power generation operator, the power is charged in a time slot when the spot market price is low, and the power is sold in a time slot when the spot market price is high, and no limitation is placed on the number of charging and discharging cycles.

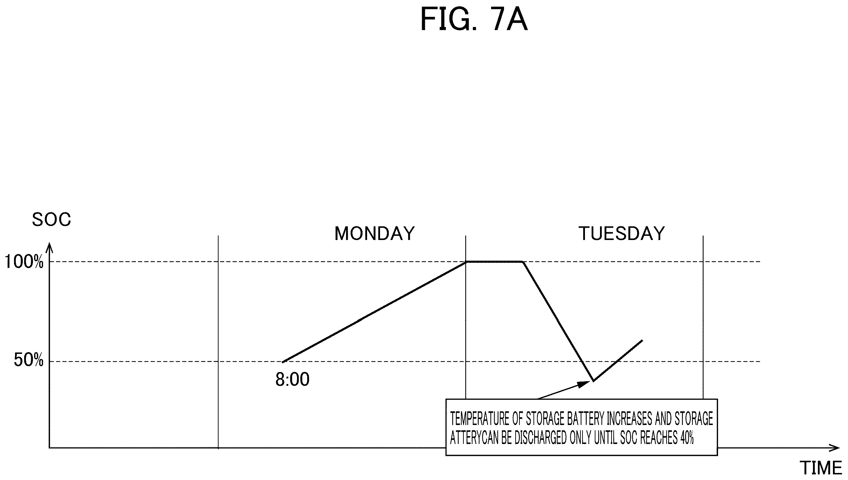

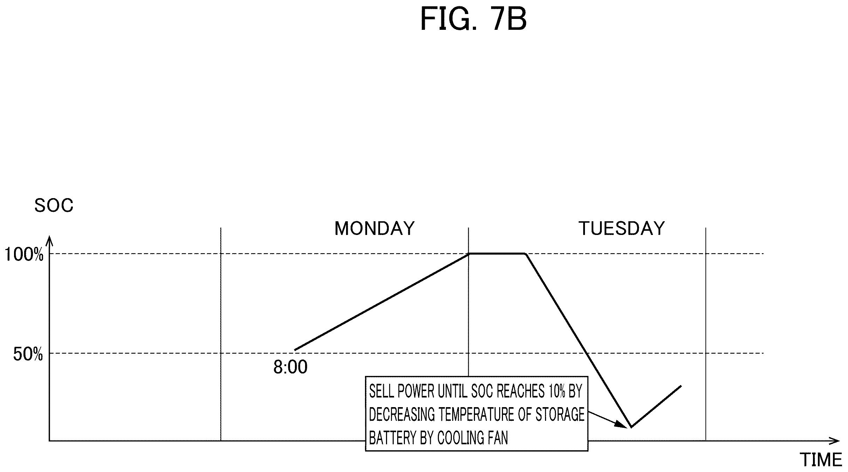

The main operation constraints of the storage battery largely include three constraints in which the temperature of the storage battery is maintained in a certain range, the direct current is set to be a certain level or less, and the charging and discharging according to the state of SOC are necessary. FIGS. 7A and 7B each illustrate a relationship between an elapsed time for charging and discharging and an SOC of the storage battery in Embodiment 1. For example, the SOC of the first storage battery is assumed to be 50.0% at the time point of 8 o'clock in the morning on Monday. Since it is predicted that the price of the spot market will become very high on Tuesday of the next day, it is desired to sell (discharge) as much power as possible in a period during which the price of the spot market is high to maximize the operation profit of the first storage battery. On the other hand, in the power operation plan including the generated-power sales plan and the operation plan of the storage battery that have been submitted by Sunday of the previous day, since the SOC is planned to reach 100.0% at the ending time point on Monday, a plan to sell (discharge) the power in a frame in which it is predicted that the spot market price will become the highest on Tuesday is formulated.

However, in a case where the power is sold (discharged) continuously for 5 hours based on the plan, since the temperature of the first storage battery significantly increases, and exceeds the upper limit value of the operating temperature, the operation constraint is imposed on the first storage battery, so that it is predicted that the power can be sold (discharged) only until the SOC reaches 40.0% (FIG. 7A). Then, a new plan is formulated to operate the cooling fan to cool the first storage battery during the power selling (discharging) time on Tuesday. Note that power is consumed to operate the cooling fan, but a reduction in the power operation profit can be suppressed by using power purchased when the spot market price is low, for the power for operating the cooling fan. As a result, the power can be sold (discharged) continuously until the SOC is reduced to about 10.0%, and the large power operation profit can be produced (FIG. 7B).

### [Embodiment 2: Use of Storage Battery as Renewable Energy-Integrated Storage Battery]

In a second embodiment of the present invention, a power generation operator installs a solar power generation facility on a roof of a factory of a company which is a power consumer, and uses a storage battery (hereinafter, referred to as a second storage battery in the present embodiment) to be provided together with the power generation facility in combination with the solar power generation facility. Note that a cooling fan is installed in the second storage battery to avoid an increase in temperature during discharging. Of the power generated in the solar power generation facility (hereinafter, referred to as the generated power amount in the present embodiment), the power consumed in the factory is sold as self-consumption power at a certain price by the power generation operator based on the power sales contract (PPA contract) concluded between the power generation operator and the company.

In a case where the generated power amount exceeds the self-consumption power amount, the surplus power amount can be sold in the spot market. However, when the power price in the spot market is low, the surplus power is not sold directly in the spot market, is temporarily charged in the second storage battery provided together with the power generation facility, and is sold as consumption power in the factory at a certain price based on the PPA contract in the time slot when the power is not generated. Here, the main operation constraints of the storage battery largely include three constraints in which the temperature of the storage battery is maintained in a certain range, the direct current is set to be a certain level or less, and the charging and discharging according to the state of SOC are necessary, similarly to the first embodiment.

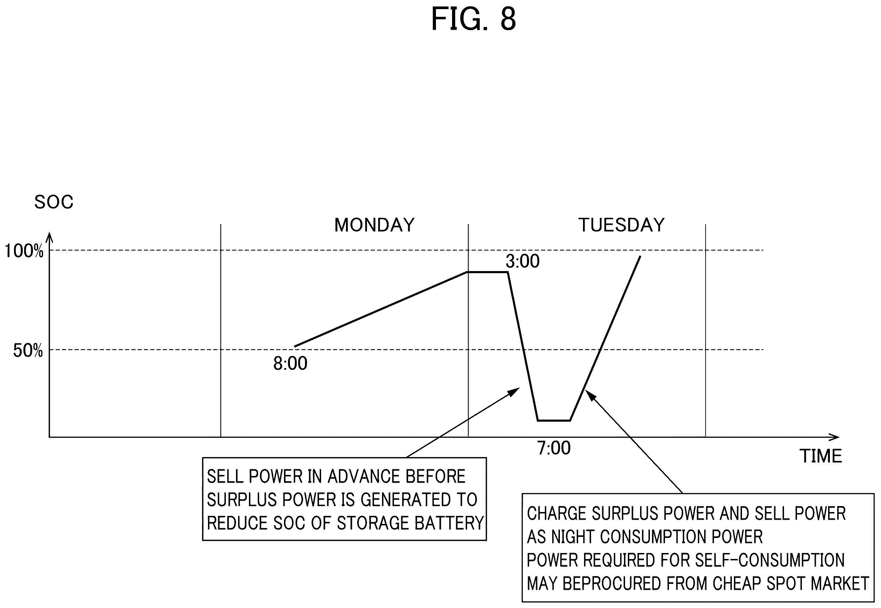

FIG. 8 shows a relationship between an elapsed time for charging and discharging and an SOC of the storage battery in Embodiment 2. For example, the SOC of the storage battery is assumed to be 50.0% at the time point of 8 o'clock in the morning on Monday. Since it is predicted that the price of the spot market will become very low in the daytime on Tuesday of the next day, it has been considered, to maximize the electricity sales profit, that the power is not sold in the market even when surplus power is generated, is charged in the storage battery as much as possible, and then, is desired to be sold to a consumer as night consumption power in the factory in the time slot after sunset when there is no generated power amount from the solar power generation facility. On the other hand, in the generated-power sales plan and the operation plan of the storage battery that have been submitted by Sunday of the previous day, the SOC is planned to reach 90.0% at the ending time point on Monday, and it is predicted that certain surplus power is generated for three hours from 11 o'clock to 14 o'clock based on the power-generation amount prediction and the power-demand amount prediction on Tuesday.

Then, it has been considered that all the surplus power is temporarily charged in the second storage battery, but it has been found that the SOC exceeds 100.0%. As shown in FIG. 8, the plan is changed so that the total amount of surplus power generated in the daytime can be charged in a state where the SOC is reduced to 10.0% by selling the power in advance between 3 o'clock and 7 o'clock on Tuesday. Note that in the corrected plan, the cooling fan installed in the second storage battery is operated in advance from the night on Monday so that the temperature can be prevented from increasing during discharging of the second storage battery and the power can be sold reliably, and the power trade profit is calculated by including the consumption power associated with the operation of the cooling fan in the power demand amount. As a result, the total amount of surplus power can be charged in the daytime on Tuesday, and then, in the time slot after sunset, the power can be sold to the consumer as the night consumption power in the factory, so that the large power operation profit can be produced.

### [Embodiment 3: Use of Storage Battery as Renewable Energy-Integrated Storage Battery]

In a third embodiment of the present invention, a power generation operator installs a solar power generation facility on a roof of a factory of a company which is a power consumer, and uses a storage battery (hereinafter, referred to as a third storage battery in the present embodiment) to be provided together with the power generation facility in combination with the solar power generation facility, similarly to the second embodiment. Note that a cooling fan is installed in the third storage battery to avoid an increase in temperature during discharging. Of the power generated in the solar power generation facility (hereinafter, referred to as the generated power amount in the present embodiment), the power consumed in the factory is sold as self-consumption power at a certain price by the power generation operator based on the power sales contract (PPA contract) concluded between the power generation operator and the company.

In a case where the generated power amount exceeds the self-consumption power amount, the surplus power amount can be sold in the spot market. However, when the power price in the spot market is low, the surplus power is not sold directly in the spot market, is temporarily charged in the third storage battery provided together with the power generation facility, and is collectively sold when the spot market price is high. Here, the main operation constraints of the storage battery largely include three constraints in which the temperature of the storage battery is maintained in a certain range, the direct current is set to be a certain level or less, and the charging and discharging according to the state of SOC are necessary, similarly to the first and second embodiments.

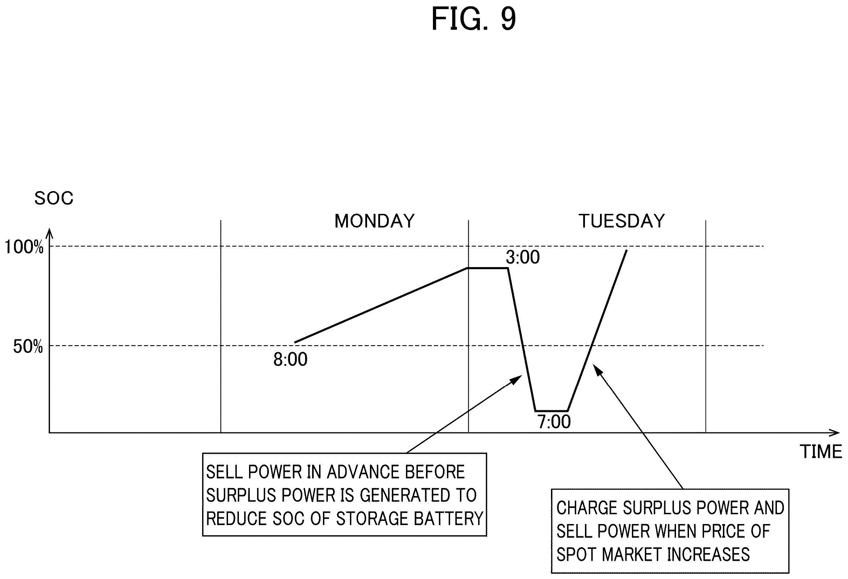

FIG. 9 shows a relationship between an elapsed time for charging and discharging and an SOC of the storage battery in Embodiment 3. For example, the SOC of the storage battery is assumed to be 50.0% at the time point of 8 o'clock in the morning on Monday. Since it is predicted that the price of the spot market will become very low in the daytime on Tuesday of the next day, it has been considered, to maximize the electricity sales profit, that the power is not sold in the market even when surplus power is generated, is charged in the storage battery as much as possible, and then, is desired to be collectively sold when the price of the spot market increases. On the other hand, in the generated-power sales plan and the operation plan of the storage battery that have been submitted by Sunday of the previous day, the SOC is planned to reach 90.0% at the ending time point on Monday, and it is predicted that certain surplus power is generated for three hours from 11 o'clock to 14 o'clock based on the power-generation amount prediction and the power-demand amount prediction on Tuesday.

Then, it has been considered that all the surplus power is temporarily charged in the third storage battery, but it has been found that the SOC exceeds 100.0%. As shown in FIG. 9, the plan is changed so that the total amount of surplus power generated in the daytime can be charged in a state where the SOC is reduced to about 10.0% by selling the power in advance between 3 o'clock and 7 o'clock on Tuesday. Note that in the corrected plan, the cooling fan installed in the third storage battery is appropriately operated so that the temperature can be prevented from increasing during discharging of the third storage battery and the power can be sold reliably, and the power trade profit is calculated by including the consumption power associated with the operation of the cooling fan in the power demand amount. As a result, the total amount of surplus power can be charged in the daytime on Tuesday, and then, the total amount of power is sold when the spot market price increases, so that the large power operation profit can be produced.

Embodiments of the present invention has been described above, but the present invention is not limited to the embodiments described above, and the present invention includes modifications and improvements within a range that enables the objective of the present invention to be achieved.

### EXPLANATION OF REFERENCE NUMERALS

1: Management server, 2: User using server, 3: External institution server, 20: Power operation system, 210: Control unit, 220: Input unit, 230: Storage device, 240: Display unit, 250: Communication unit, 260: Output unit, 270: System bus, 2101: Acquisition unit, 2102: State acquisition unit, 2103: Power trade-price acquisition unit, 2104: Imbalance-fee acquisition unit, 2105: Power-generation amount acquisition unit, 2106: Power-demand amount acquisition unit, 2107: Plan creation unit, 2108: Determination unit, 2109: Calculation comparison unit, 2110: Plan determination unit, 2111: Storage unit, 31: Power generation facility (solar light), 32: Power generation facility (wind power), 33: Power generation facility (others), 34: Power consumption facility (operation power), 35: Power consumption facility (electric light), 36: Storage battery, 37: Other resources, 41: Spot market, 42: Hour-ahead market, 43: Supply-and-demand adjustment market, 44: Capacity market, 45: Retail electricity supplier, 46: Other electricity sales destination, 47: Organization for Cross-regional Coordination of Transmission Operators, 50: Information sender, 51: Weather information, 52: Power generation facility information, 53: Current affairs information, 54: Power-system usage wide-range reserve-margin information, 55: Power-market information

## Claims

1. A power operation system, comprising:
one or more acquisition units selected from
a state acquisition unit that acquires a current state and a future state prediction of a storage battery including at least one selected from a state of charge (SOC) of the storage battery, a state of health (SOH) of the storage battery, and a battery temperature, and a current state and a future state prediction of a power generation facility or a power consumption facility,
a power trade-price acquisition unit that acquires a future power trade-price prediction value in a power transaction market,
an imbalance-fee acquisition unit that acquires a future imbalance-fee prediction value, and
a power-generation amount acquisition unit that acquires a future power generation amount prediction value and a power-demand amount acquisition unit that acquires a future power-demand amount prediction value;
a plan creation unit that creates some or all of a charging and discharging plan of the storage battery, a generated-power sales plan, and a demand and procurement plan that maximize a power operation profit based on some or all of the current state and the future state prediction of the storage battery, the current state and the future state prediction of the power generation facility or the power consumption facility, the power trade-price prediction value, the imbalance-fee prediction value, the power-generation amount prediction value, and the power-demand amount prediction value that are acquired by the acquisition unit selected; and
a storage unit that stores constraint conditions for constraining an operation of the storage battery and an avoidance measure of the constraint.

2. The power operation system according to claim 1, comprising:
a determination unit that determines a section in which the charging and discharging plan, the generated-power sales plan, and the demand and procurement plan that are created need to be changed, based on the constraint conditions stored,
a calculation comparison unit that calculates and compares, in the section determined by the determination unit, two or more selected from
a power operation profit in a case where the charging and discharging plan, the generated-power sales plan, and the demand and procurement plan are changed,
a power operation profit in a case where the avoidance measure of the constraint conditions is performed, and
a power operation profit in a case where the charging and discharging plan, the generated-power sales plan, and the demand and procurement plan are changed and the avoidance measure of the constraint conditions is performed; and
a plan determination unit that changes the charging and discharging plan, the generated-power sales plan, and the demand and procurement plan or performs the avoidance measure of the constraint conditions, based on a comparison result from the calculation comparison unit.

3. The power operation system according to claim 2, wherein
the constraint conditions include a constraint of a charging and discharging duration due to temperature changes of the storage battery, a constraint of upper and lower limit temperatures at which the charging and discharging are stopped, a constraint of a current amount during the charging and discharging, and a constraint of upper and lower limits of an SOC.

4. The power operation system according to claim 2, wherein
the avoidance measure includes an adjustment of a charging and discharging amount of the storage battery, and cooling or heating of the storage battery.

5. The power operation system according to claim 2, wherein
the power operation profit is able to be calculated using one or more selected from a cost of power associated with performance of the avoidance measure, a cost of power used for an auxiliary device installed in each of a power generation facility and the storage battery, and an imbalance fee.
